# EUROPÄISCHE PATENTSCHRIFT

(11) **EP 0 621 680 B1**
(45) Veröffentlichungstag und Bekanntmachung des Hinweises auf die Patenterteilung: **24.09.1997**
(21) Anmeldenummer: 94105348.0
(22) Anmeldetag: 07.04.1994
(51) Int. Cl.: H02P 1/26

(54) **Verfahren zur Drehmomentbegrenzung beim Sanftanlauf eines Drehstromasynchronmotors**
Method for limiting of the torque in soft starting of a threephase asynchronous motor
Méthode pour la limitation du couple en démarrage d'un moteur asynchrone triphasé

(30) Priorität: 17.04.1993 DE 4312549
(43) Veröffentlichungstag der Anmeldung: 26.10.1994
(73) Patentinhaber: AEG Stromversorgungs-Systeme GmbH, 59581 Warstein (DE)
(72) Erfinder: Böckeler, Dieter, D-59581 Warstein (DE); Liese, Michael Harro, D-59581 Warstein (DE)
(74) Vertreter: Erbacher, Alfons, Dipl.-Ing.

(56) Entgegenhaltungen:
- EP-A- 0 283 049
- CH-A- 573 187
- DE-A- 3 529 039

## Beschreibung

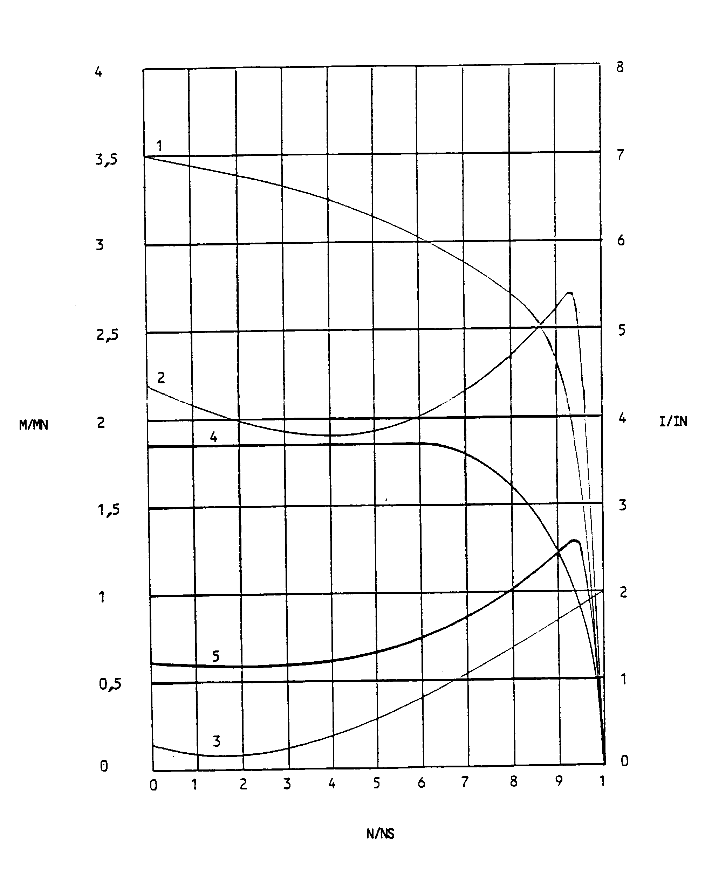

Die Erfindung betrifft ein Verfahren zur Drehmomentbegrenzung beim Sanftanlauf eines Drehstromasynchronmotors mittels Thyristoren, die in jeder der drei Phasen zu Thyristorstellern verschaltet sind, wobei der Drehstromasynchronmotor in einem die Thyristorsteller enthaltenden Regelkreis betrieben wird und die Versorgung des Drehstromaysnchronmotors durch Phasenanschnitt über den Steuerwinkel der Thyristoren eingestellt wird.
Beim Betrieb von Drehstromasynchronmotoren wird ein Sanftanlauf angestrebt, um ein schädliches Kippmoment beim Hochlaufen des Motors zu vermeiden. Hierzu wird zunächst auf Fig. 2 Bezug genommen. In dem Diagramm ist zur Erläuterung des Anlaufverhaltens der Anlaufstrom des Motors und der Verlauf des Motormoments in Abhängigkeit von der Drehzahl dargestellt. Die Kurve 1 zeigt den direkten Anlaufstrom des Motors und die Kurve 2 das direkte Moment des Motors. Im rechten Teil der Momentenkurve nimmt das Moment sehr stark zu und erreicht einen Spitzenwert, nach dessen Überschreiten das Drehmoment stark fällt. Das Auftreten eines solchen Kippmomentes ist unerwünscht, da es unter anderem zu einer starken Beanspruchung des nachgeschalteten Getriebes führt.
Aus der CH-A-573 187 ist ein Verfahren der eingangs genannten Art bekannt. Dort wird für den Sanftanlauf die Ständerspannung geregelt. Die Ständerspannung wird in einer Phase des Sanftanlaufs auf einen konstanten Wert (unterhalb der Nennspannung) geregelt und danach mit dem Beginn einer Hochlaufregelung rampenförmig auf einen Nennspannungswert. Zur Auslösung der Hochlaufregelung wird der Motorstrom gemessen. Wenn ein Grenzwert erreicht wird, beginnt die Hochlaufregelung. Der Grenzwert ist ein Bruchteil der Motorstromstärke bei der Kippmoment-Drehzahl.

Aus der Zeitschrift "industrie elektrik + elektronik", 31. Jahrgang, 1986, Nr. 7, Seiten 42 bis 44, ist ebenfalls ein Verfahren zur Drehmomentbegrenzung beim Sanftanlauf eines Drehstromasynchronmotors bekannt. Spannung und Strom werden in allen drei Phasen mit Hilfe von elektronisch gesteuerten Thyristoren symmetrisch geregelt. Eine Erfassung der Wirkleistung in mindestens einer Phase und eine Wirkleistungsregelung des Drehstromasynchronmotors sind nicht erwähnt.

Eine Regelungseinrichtung für einen Induktionsmotor, bei der die zugeführte und die ans Netz zurückfließende Leistung bestimmt und für die Regelung genutzt werden, ist aus der DE-A-31 16 047 bekannt. Durch diese bekannte Regelungseinrichtung erreicht der Motorwirkungsgrad ein Maximum und der Leistungsverbrauch ein Minimum. Der Sanftanlauf eines Drehstromasynchronmotors wird nicht erwähnt.

Um das schädliche Kippmoment beim Anlauf eines Drehstromasynchronmotors zu verkleinern, ist es grundsätzlich möglich, das Phasenanschnittverfahren während des Anlaufes so zu steuern, daß der Anlauf über eine vorgegebene Rampenfunktion des Stromes erfolgt und der Strom dann auf eine vorgegebene Stromgrenze eingestellt wird. Aber auch bei diesem Verfahren tritt vor Erreichen der Motornenndrehzahl ein noch erhebliches Kippmoment auf, wie es in Fig. 2 schematisch dargestellt ist.

Der Erfindung liegt daher die Aufgabe zugrunde, ein Verfahren zum Anlauf eines Drehstromasynchronmotors verfügbar zu machen, bei dem nur noch ein vernachlässigbares Kippmoment auftritt.

Diese Aufgabe wird gemäß der Erfindung dadurch gelöst, daß die Wirkleistung in mindestens einer Phase erfaßt und beim Sanftanlauf auf einen konstanten Wert geregelt wird.

Da die Wirkleistung und das Drehmoment über der Drehzahl nahezu zueinander proportional sind (Wirkleistung = Drehmoment x Kreisfrequenz), kann somit durch die erfindungsgemäße Regelung im Anlauf das Drehmoment annähernd konstant gehalten werden. Es wird somit verhindert, daß beim Anlauf ein erhebliches Kippmoment auftritt. Dadurch werden die mechanischen Teile des Drehstromasynchronmotors und daran angeschlossener Vorrichtungen (Getriebe, Kupplungen, Keilriemen...) verhältnismäßig wenig belastet.

Das Wesen der Erfindung soll anhand der Figuren näher erläutert werden.

Es zeigen:

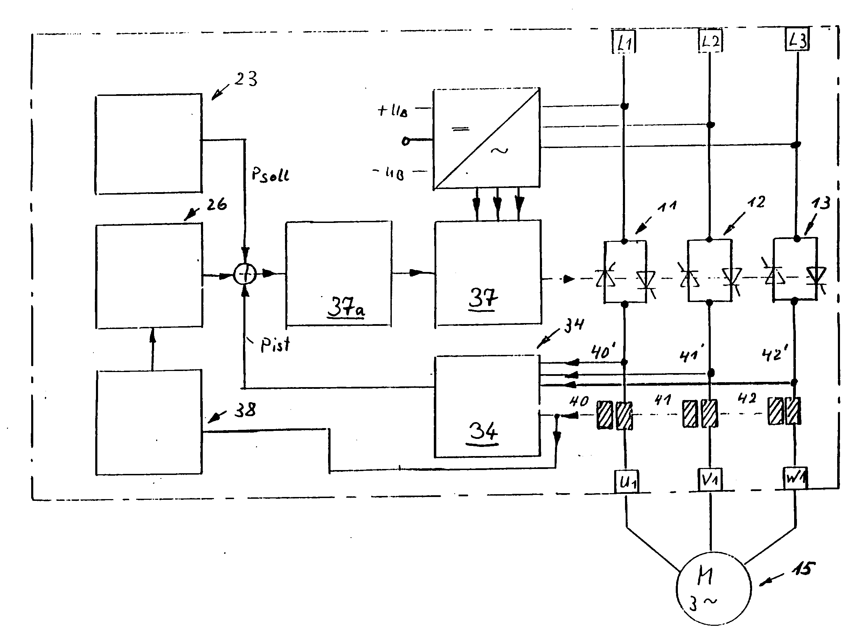

- Fig. 1: die schematische Darstellung des Regelkreises und
- Fig. 2: den Verlauf des Stromes und des Moments in Abhängigkeit von der Drehzahl des Motors.

Der Drehstromasynchronmotor 15 weist drei Phasen L1, L2, L3 auf, wobei in jeder Phase ein Thyristorsteller 11, 12 und 13, bestehend aus zwei antiparallel geschalteten Thyristoren, vorgesehen ist. Die Einstellung der Steuerwinkel der einzelnen Thyristoren erfolgt über einen Steuersatz 37. Dem Steuersatz 37 ist ein Leistungsregler 37a vorgeschaltet. Zur Wirkleistungserfassung in den drei Phasen L1, L2, L3 sind drei Stromwandler 40, 41 und 42 sowie ein Spannungsabzweig an drei Punkten 40', 41' und 42' vorgesehen. Die drei Punkte 40', 41', 42' sind in den drei Phasen L1, L2, L3 zwischen den Thyristorstellern 11, 12, 13 und den Stromwandlern 40, 41, 42 angeordnet. Mit dieser Wirkleistungserfassung wird ein Istwert gebildet, der mit einem vorgegebenen Sollwert zu einem Sollistwertvergleich herangezogen wird.

Die an den drei Punkten 40', 41', 42' abgegriffene Spannung und die aus den Stromwandlern 40, 41, 42 herausfließenden Ströme werden einer Leistungserfassungseinrichtung 34 zugeführt. Darin wird die in den Drehstromasynchronmotor 15 fließende Wirkleistung Pᵢₛₜ ermittelt. Diese Wirkleistung Pᵢₛₜ wird als Istwert der Regelgröße einem Summierpunkt eines Regelkreises zugeführt. Diesem Summierpunkt wird ferner eine von einem Hochlaufgeber 23 stammende Wirkleistung Pₛₒₗₗ, die die Führungsgröße darstellt, zugeführt.
Der Anlauf des Drehstromasynchronmotors 15 erfolgt also in Abhängigkeit von der Wirkleistung in den einzelnen Phasen L1, L2, L3, wobei zusätzlich zu einem vorgegebenen Wirkleistungswert die Wirkleistung begrenzt wird. Vor dieser Leistungsbegrenzung kann auch noch eine Strombegrenzung vorgesehen werden.

Dazu wird an den Summierpunkt zusätzlich ein Signal aus einer Schaltung zur Stromerfassung 38 und Strombegrenzung 26 geführt. Diese Schaltung wird von dem aus dem Stromwandler 40 herausfließenden Strom gespeist. Der weiter oben erwähnte Leistungsregler 37a ist dem Summierpunkt nachgeschaltet.

In Fig. 2 zeigt die Kurve 4 den Stromverlauf bei der Wirkleistungsregelung, während die Kurve 5 den Momentenverlauf bei der Wirkleistungsregelung wiedergibt.

Es bezeichnet M das Drehmoment, MN das Nennmoment, N die Drehzahl, NS die Synchrondrehzahl, I den Strom und IN den Nennstrom.

Es ist ohne weiteres ersichtlich, daß durch das Verfahren gemäß der Erfindung das Kippmoment gegenüber dem direkten Motorbetrieb um einen wesentlichen Betrag reduziert wird. Die Kurve 3 zeigt dann noch den Verlauf des Lastmomentes in Abhängigkeit von der Drehzahl.

Bei dem Verfahren gemäß der Erfindung wird durch Rückführung einer wirkleistungsproportionalen Größe in den Regelkreis nach zunächst ansteigender Wirkleistung die Wirkleistung auf einen konstanten Wert geregelt, die eine Stromabsenkung und damit eine Drehmomentenbegrenzung zur Folge hat. Das Verfahren läßt sich auch so durchführen, daß vor der Wirkleistungsbegrenzung auch noch eine Strombegrenzung vorgenommen wird.

## Patentansprüche

1. Verfahren zur Drehmomentbegrenzung beim Sanftanlauf eines Drehstromasynchronmotors (15) mittels Thyristoren, die in jeder der drei Phasen (L1, L2, L3) zu Thyristorstellern (11, 12, 13) verschaltet sind, wobei der Drehstromasynchronmotor (15) in einem die Thyristorsteller (11, 12, 13) enthaltenden Regelkreis betrieben wird und die Versorgung des Drehstromaysnchronmotors (15) durch Phasenanschnitt über den Steuerwinkel der Thyristoren eingestellt wird,
**dadurch gekennzeichnet**,
daß die Wirkleistung in mindestens einer Phase (L1, L2, L3) erfaßt und beim Sanftanlauf auf einen konstanten Wert geregelt wird.

## Claims

1. Method for torque limitation during the gentle running-up of a polyphase alternating current asychronous motor (15) by means of thyristors which are connected into regulating thyristor members (11, 12, 13) in each of the three phases (L1, L2, L3), wherein the polyphase alternating current asynchronous motor (15) is operated in a regulating loop containing the regulating thyristor members (11, 12, 13) and the supply of the polyphase alternating current asynchronous motor (15) is regulated by phase section by way of the control angle of the thyristors, characterised thereby, that the real power is detected in at least one phase (L1, L2, L3) and regulated to a constant value during the gentle running-up.

## Revendications

1. Procédé de limitation du couple lors du démarrage en douceur d'un moteur asynchrone à courant alternatif (15), au moyen de thyristors, branchés dans chacune des trois phases (L1, L2, L3) allant à des régulateurs à thyristors (11, 12, 13), le moteur asynchrone à courant alternatif (15) étant utilisé dans un circuit de régulation contenant les régulateurs à thyristors (11, 12, 13) et l'alimentation du moteur asynchrone à courant alternatif (15) étant régulée par un découpage de phase fait par l'intermédiaire de l'angle de commande des thyristors, caractérisé en ce que la puissance active dans au moins une phase (L1, L2, L3) est appréhendée et est régulée à une valeur constante au moment du démarrage en douceur.
